# EUROPEAN PATENT APPLICATION

(11) **EP 3 828 910 A1**
(43) Date of publication of application: **02.06.2021**
(21) Application number: 19306523.2
(22) Date of filing: 26.11.2019
(51) Int. Cl.: H01H 13/50, H02B 1/044, H02B 1/048

(54) **CONTROL AND/OR SIGNALING COMPONENT**

(71) Applicant: Schneider Electric Industries SAS, 92500 Rueil Malmaison (FR)
(72) Inventor: FORT, Thierry, 16130 Gimeux (FR); THIZON, Patrice, 16600 Ruelle sur Touvre (FR)
(74) Representative: Percheron, Arthur

(57) **Abstract**

A control and/or signaling component (1) adapted to be inserted through an opening (5) of a wall (2), the component (1) comprising an activation button (6), a tubular body (10), a base (3) and at least - one central electrical control or signaling block (4b) and at least one lateral electrical control or signaling block (4a, 4b), wherein the central electrical control or signaling block (4b) is adapted to be actuated by the lateral electrical control or signaling block (4a, 4b) or the rotational movement from the activation button (6). The base has first and second fixing orifices (31, 32) to be held against the wall (2) by fixing screws (50, 51) and is provided with metal reinforcement zones (38) around the orifices. A mechanism having a resilient spring (71) and a contact element (72) is provided to assemble the tubular body (10) to the base (3).

## Description

### Technical Field

The present invention relates to a control and/or signaling component comprising a fixing device.

### Background Art

An electrical control and/or signaling component that is used in the industry, such as a pushbutton, an emergency stop button, an indicator light, is intended to be fixed through an opening located in a wall, such as the panel of an electrical switchboard or the door of an electrical console.

The control and/or signaling component comprises a tubular body that can be engaged in the opening of the wall and that has a collar that comes into abutment against the outer face of the wall.

A fixing device allows the component to be fixed to the opening by coming into abutment against the inner face of the wall. The fixing device generally comprises a base that can be assembled, using assembling means, to the body from the inner face of the wall.

The base is adapted to receive at least one electrical block as well as fixing means adapted to come into abutment against the inner face of the wall to hold the component against the wall.

FR 2735274, WO 91/07790, FR 2654266 and EP 0889564 already disclose such a fixing device. In these prior arts, the base can comprise three-point fixing means. However, these fixing devices are often complex and therefore expensive to manufacture.

For reasons of simplification, the base can comprise only two-point fixing means, which then generally use two screws passing through orifices of the base and coming into abutment against the inner face of the wall.

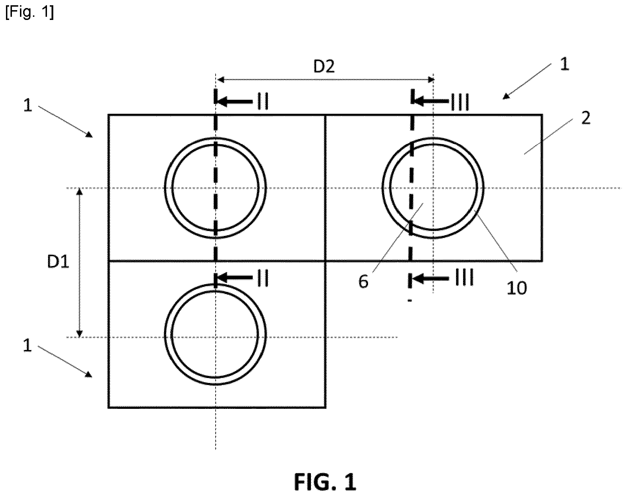

However, the fixing device must comply with some dimensional constraints. Indeed, as shown on [Fig. 1], in order to remain compatible with the control and/or signaling components that are most commonly installed today, the distance D1 between the axis of a first control and/or signaling component and the axis of a second adjacent control and/or signaling component in the vertical direction must generally be 30 mm and the distance D2 between the axis of a first control and/or signaling component and the axis of a third adjacent control and/or signaling component in the horizontal direction must be 40 mm.

With fixing devices having three-point fixing means, these constraints can easily be addressed.

These constraints are more difficult to address with fixing devices having only two-point fixing means since these two-point fixing means need to be aligned with the center of the base, which then requires bigger dimensions of the base in the alignment direction.

These constraints can however be addressed with fixing means having only two-point fixing means, for instance as disclosed in patent application filed under number FR1853091, in which the base comprises a plate which has a curved part with apertures for receiving an attachment latch of an electrical block. Thanks to the curved part of the base, it is possible to use two-point fixing means using screws, while allowing to receive several electrical blocks on the same base.

Although such a base may be satisfactory, it requires a complex design of the base that may be difficult and expensive to manufacture.

Therefore, there is a requirement for a fixing device, in particular with two-point fixing means, that ensures a reliable fixing of the control and/or signaling component through the wall, and in particular that can maintain minimal distances D1, D2 between two adjacent control and/or signaling components on a wall.

### Summary

The invention improves the situation.

It is proposed a control and/or signaling component adapted to be inserted through an opening of a wall, the component comprising:
- an activation button adapted to convert an input of a user into at least one translational and/or rotational movement;
- a base adapted to fix the component to the wall, the base having an opening in a main direction adapted to receive the activation button;
- at least two electrical control and/or signaling blocks to be received on the base, wherein the at least two electrical control or signaling blocks comprise:
- one central electrical control and/or signaling block facing the activation button in the main direction;
- at least one lateral electrical control or signaling block adapted to be placed next to the central electrical control or signaling block,
wherein the central electrical control or signaling block is adapted to be actuated by:
- the lateral electrical control or signaling block; or
- the rotational movement from the activation button.

Thanks to this arrangement, there is no translational force exerted directly on the central block. It is therefore not necessary to use locking means in the central part of the base to have a strong attachment. These locking means can therefore be relatively smaller and leave more space available for the fixing means, so that the dimensional constraints on the whole component can be met.

The following features can be optionally implemented, separately or in combination one with the others:
The central electrical control or signaling block and the lateral electrical control or signaling block are two distinct single blocks.

The central block is a single signaling block. A signaling block can be advantageously actuated electrically in an indirect manner, and not mechanically with the activation button.

The lateral electrical control or signaling block comprises first locking means to be received on the base and the central electrical control or signaling block comprises second locking means to be received on the base, first and second locking means being different from each other. The lateral electrical control or signaling block can be actuated mechanically with the activation button but cannot be detached when being subjected to the force from the activation button thanks to the first locking means.

The base comprises first reception means and second reception means (34) to respectively receive the first and second locking means.

The central electrical control or signaling block and the lateral electrical control or signaling block form a double block.

The central block is a control block of the double block.

The central electrical control or signaling block and the lateral electrical control or signaling block comprise reception means on a rear face to allow at least one other electrical control or signaling block to be added by stacking on the base.

The base is made of a single element in metal or plastic material.

The base has a parallepipedic shape, the base comprising a first symmetrical plane and a second symmetrical plane, the symmetrical planes intersecting orthogonally at a central point.

The base has a first fixing orifice and a second fixing orifice to be screwed against the wall with fixing means, the second reception means being aligned with the first and second orifices.

The base comprises reinforced zones made of metal around the first orifice and the second orifice.

The central block comprises lateral faces having an oblique side to allow an inclined passage to be provided for a tool for maneuvering a first fixing screw and a second fixing screw respectively located in the first and second fixing orifices.

Each of the first and second fixing orifices is inclined relative to the main direction.

The base is adapted to be assembled to a body of the component with a mechanism having a resilient spring and a contact element.

### Brief description of drawings

Other features, details and advantages will be shown on the following detailed description and on the figures, on which:
**Fig. 1**
   [Fig. 1] shows the horizontal and vertical distances between centers of adjacent control and/or signaling components located side by side on a wall.
**Fig. 2**

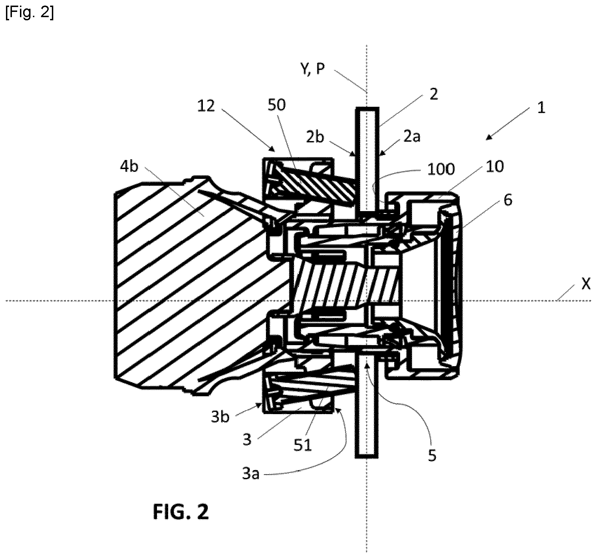

   [Fig. 2] shows a section view according to section plane II-II of [Fig. 1] of a luminous type control component fixed on a wall and on which the fixing device of the invention is assembled, as well as an electrical signaling block according to an embodiment.
**Fig. 3**

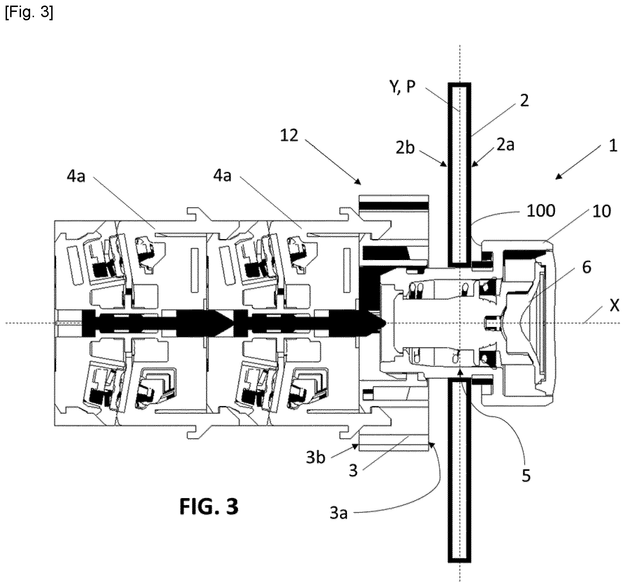

   [Fig. 3] shows a section view according to section plane III-III of [Fig. 1] of a pushbutton type control component fixed on a wall and on which the fixing device of the invention is assembled, as well as electrical control blocks according to an embodiment.
**Fig. 4**

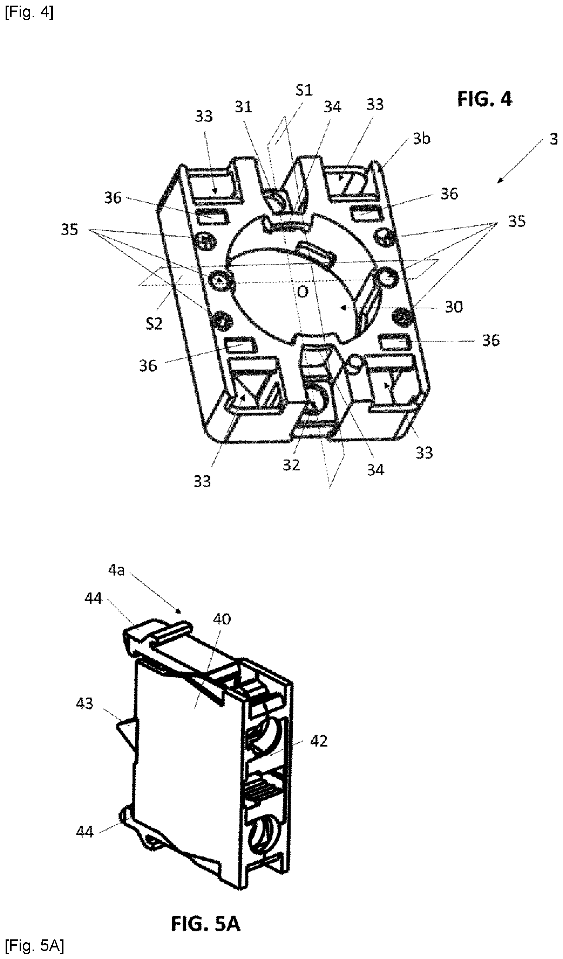

   [Fig. 4] shows a perspective view of a base of the control and/or signaling component of [Fig. 1] according to an embodiment.
**Fig. 5A**
   [Fig. 5A] shows a perspective view of a single block able to be received on the base of [Fig. 4].
**Fig. 5B**

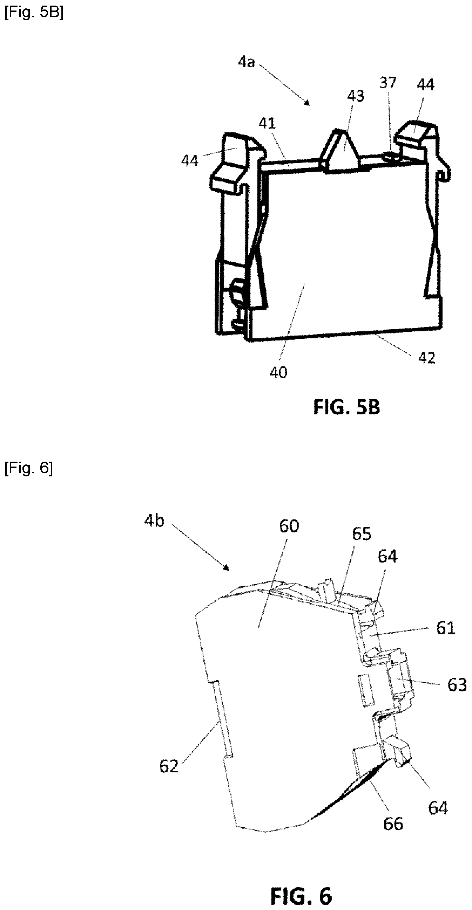

   [Fig. 5B] shows another perspective view of the block of [Fig. 5A].
**Fig. 6**
   [Fig. 6] shows a perspective view of another single block able to be received on the base of [Fig. 4].
**Fig. 7**

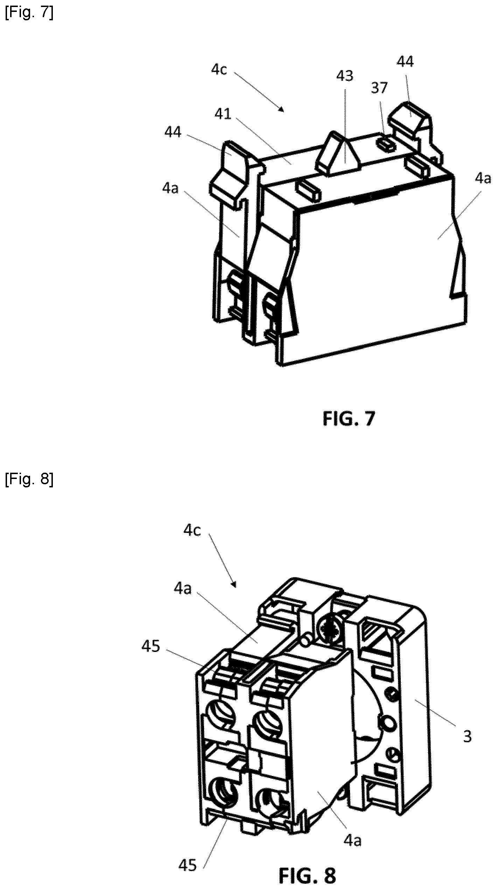

   [Fig. 7] shows a perspective view of a double block able to be received on the base of [Fig. 4].
**Fig. 8**
   [Fig. 8] shows another perspective view of the double block of [Fig. 7].
**Fig. 9**

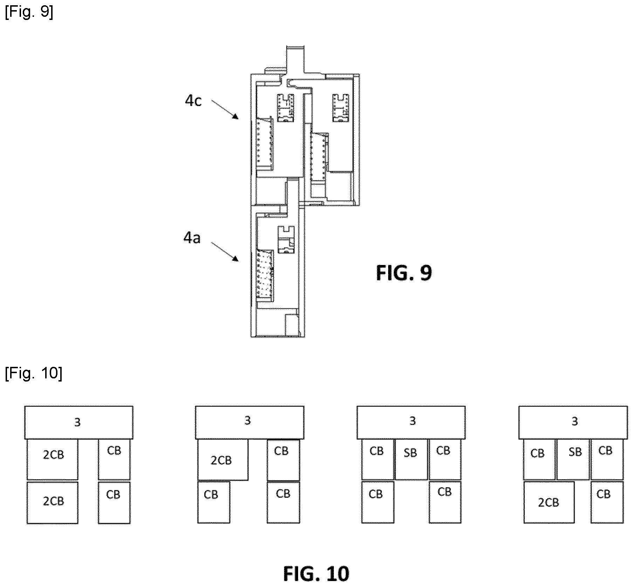

   [Fig. 9] shows the inside of a double electrical control block and a single electrical block connected with each other.
**Fig. 10**
   [Fig. 10] shows four different arrangements of single or double electrical blocks received on the base of [Fig. 4].
**Fig. 11A**

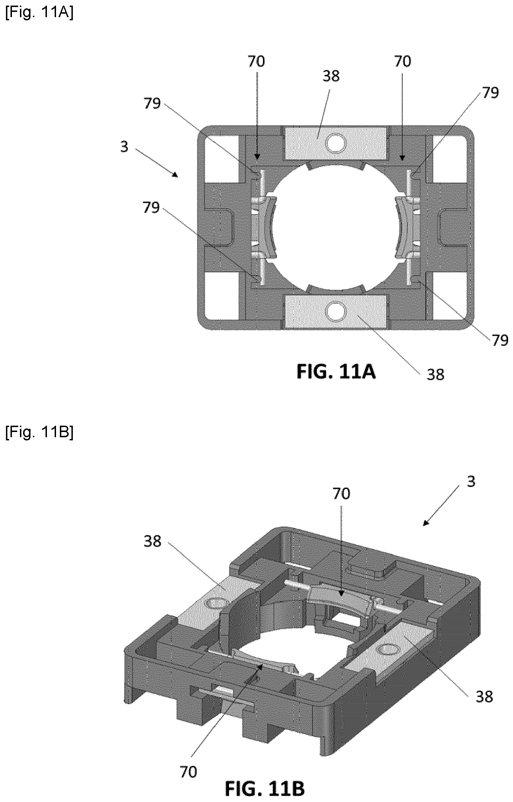

   [Fig. 11A] shows a front view of a base of a control and/or signaling component according to another embodiment.
**Fig. 11B**
   [Fig. 11B] shows another perspective view of the base of [Fig. 11A].
**Fig. 12**

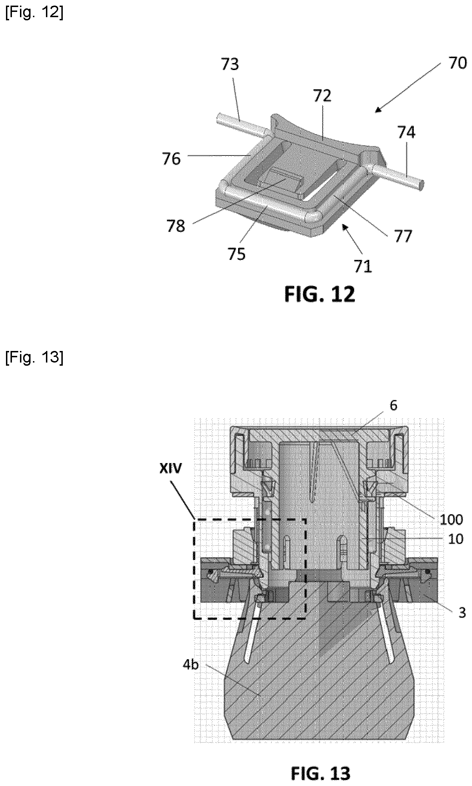

   [Fig. 12] shows a perspective view of the mechanism of [Fig. 11A] and [Fig. 11B].
**Fig. 13**
   [Fig. 13] shows a section view of a luminous type control component fixed on a wall comprising the base according to the other embodiment of [Fig. 11A] and [Fig. 11B].
**Fig. 14**

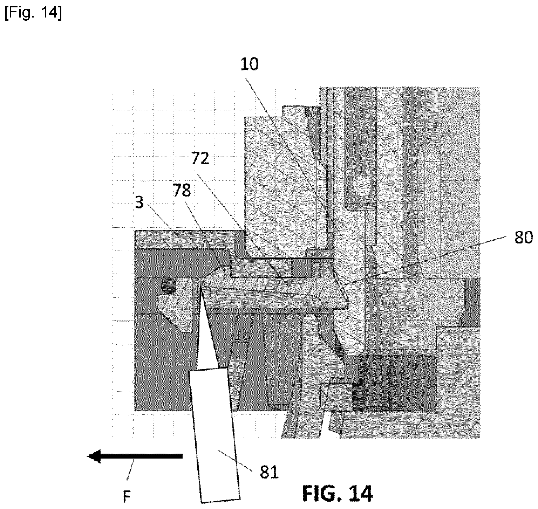

   [Fig. 14] shows an enlarged view of [Fig. 13] with a tool used to disassemble a body 10 of the control and/or signaling component from the base of [Fig. 11A] and [Fig. 11B].

### Description of Embodiments

Figures and the following detailed description contain, essentially, some exact elements. They can be used to enhance understanding the disclosure and, also, to define the invention if necessary.

### Control and/or signaling component

It is now referred to [Fig. 2] and [Fig. 3] which show a control and/or signaling component 1 (hereafter called "component").

In a non-limiting manner, the component 1 can be a pushbutton, a rotary knob, an indicator light, an emergency stop button, a luminous pushbutton, a luminous rotary knob, or the like.

The component 1 can comprise both a control function, by actuating one or several electrical signals, and a signaling function, by switching on/off one or several lights. Other functions are possible.

The component 1 is adapted to be engaged in a circular opening 5 through a wall 2, for example the door of an electrical cabinet, a panel of an electrical switchboard or a control console.

The opening 5 can advantageously have a standardized diameter, for instance equal to 22 mm or 25.5 mm.

When engaged in the opening 5, the component 1 extends in a main direction X. The main direction X corresponds to an axis that traverses the opening 5. The wall 2 and the opening 5 extend in a second direction Y that is perpendicular to the main direction X. The wall 2 defines an outer face 2a and an inner face 2b on opposite sides of a median plane P, the median plane P comprising the second direction Y.

The component 1 comprises an activation button 6 being adapted to convert an input of a user into a rotational and/or translational movement.

The component 1 also comprises a tubular body 10.

The body 10 is adapted to be inserted into the opening 5 through the wall 2. The body 10 comprises a collar adapted to surround the activation button 6. The collar forms a shoulder 100, which comes close or into abutment on the outer face 2a of the wall 2 around the opening 5. The body 10 can be made of metal or plastic materials.

A fixing device 12 allows the component to be fixed to the opening 30 by coming into abutment against the inner face 2b of the wall 2.

### Base

The fixing device 12 comprises a base 3. As shown more specifically in [Fig. 4], the base 3 has a parallepipedic shape. The base 3 comprises a first symmetrical plane S1 and a second symmetrical plane S2, the symmetrical planes S1, S2 intersecting orthogonally at a central point O.

The base 3 also comprises a front face 3a and a rear face 3b parallel to each other. The front and rear faces 3a, 3b are substantially flat.

By "front and rear faces", it is understood that the front face 3a is relatively closer to the inner face 2b of the wall 2 compared to the rear face 3b that is located relatively further when the base 3 is assembled to the body 10. The front and rear faces 3a, 3b of the base 3 are then perpendicular to the main direction X, parallel to the median plane P.

Referring to [Fig. 4], the base 3 has a central circular opening 30 with a diameter that is adapted to be traversed by the body 10 of the component 1.

The base 3 is adapted to be assembled to the body 10. The base 3 can be fixed on the tubular body 10 by interlocking, catching or using a bayonet mechanism, or with any other assembling means.

The component 1 also comprises fixing means adapted to fix the base 3 to the wall 2.

More precisely, the base 3 can be screwed against the wall 2. To this end, the base 3 has a first fixing orifice 31 and second fixing orifice 32 as shown on [Fig. 4].

The first and second fixing orifices 31, 32 are on opposite sides of the opening 30 of the base 3 and of the second symmetrical plane S2 while the first and second fixing orifices 31, 32 belong to the first symmetrical plane S1.

As shown on [Fig. 2], the fixing means comprises a first fixing screw 50 to be screwed into the first orifice 31 and a second fixing screw 51 to be screwed into the second orifice 32. The ends of the first and second fixing screws 50, 51 are adapted to come into abutment against the inner face 2b of the wall 2. The screwing amplitude enables adaptation with respect to the thickness of the wall 2. When the base 3 is assembled to the body 10, the front and rear faces 3a, 3b of the base 3 are substantially parallel to the median plane P.

According to an embodiment, each of the first and second fixing orifices 31, 32 may be inclined relative to the main direction X. Thus, when screwing, the first and second fixing screws 50, 51 are inclined towards the main direction X, so that these first and second fixing screws 50, 51 reach the inner face 2b of the wall 2, directly or almost directly below the shoulder 100 of the body 10. This way, it is possible to prevent deforming the wall 2, particularly when the wall 2 is particularly thin.

### Electrical control and/or signaling blocks

The base 3 is intended to receive one or more electrical control and/or signaling blocks 4a, 4b, 4c (called hereafter "blocks").

More precisely, the base 3 is adapted to receive a central block, received at the center of the base 3. The base 3 is also adapted to receive at least one lateral block, advantageously two lateral blocks, received on the lateral part of the base 3.

By "at the center of the base", it is understood that the central block faces the activation button 6 in the main direction X. To the opposite, by "on the lateral part of the base", it is thus understood that the lateral block is not facing the activation button 6 but is located on the side of the base 3 or along an edge of the base 3, i.e. offset in the second direction Y from the central point O.

The central and lateral blocks are then placed adjacently, perpendicular to the second direction Y and the median plane P. A component 1 can thus comprise one, two or three adjacent blocks 4a, 4b, 4c as detailed below. When comprising three adjacent blocks, a central block is sandwiched between two lateral blocks.

A lateral block can be a control block 4a, as illustrated on [Fig. 3]. A control block 4a is adapted to command one or several electrical signals. The control block 4a can be of the normally open (NO) or normally closed (NC) type.

As shown on [Fig. 5A] and [Fig. 5B], a control block 4a comprises a parallepipedic shaped casing 40 made of an insulating material. Also, the control block 4a comprises a front face 41 and a rear face 42 opposite each other.

The front face 41 is adapted to come into abutment against the outer face 3b of the base 3.

The control block 4a comprises a pusher 43 that projects from the front face 41. The pusher 43 can be translationally and/or rotationally movable. The pusher 43 is electrically connected to a contact inside the casing 40 (not shown) that can command the electrical signal.

Activating the activation button 6 of the component 1 moves the pusher 43 and thus the movable contact of the block, for instance by exerting a force on the pusher 43 along the main direction X or by exerting a rotational force on the pusher 43 about the main direction X.

A central block can advantageously be a signaling block 4b, as illustrated on [Fig. 2]. A signaling block 4b is adapted to emit a luminous signal. As shown on [Fig. 6], like a control block 4a, a signaling block 4b comprises a parallepipedic shaped casing 60 made of an insulating material. Also, the signaling block 4b comprises a front face 61 and a rear face 62 opposite each other.

As shown on [Fig. 6], the signaling block 4b comprises a light emitter 63 that projects from the front face 61. The light emitter 63 can be of any type, such as a light-emitting diode. To this end, the activation button 6 can be at least partly transparent or translucid to let the light pass through the wall 2 in direction of the user.

Activating the activation button 6 of the component 1 switches on/off the light emitter 63 so that the user can see the light. To this end, the central block 4b, can be actuated electrically independently from a force exerted along the main direction X by the user. The central block may also be actuated thanks to the lateral block.

According to an embodiment, the signaling block 4b may comprise lateral faces having an oblique side 65, 66 allowing an inclined passage to be provided for a tool for maneuvering the fixing screws 50, 51 respectively located in the first and second fixing orifices 31, 32.

A lateral block and a central block comprise different locking means, allowing them to be received on the base 3. Also, the base 3 comprises at least two different types of complementary reception means to receive different types of lateral or central blocks.

As shown on [Fig. 5A] and [Fig. 5B], the lateral block, such as a control block 4a, comprises first locking means 44, such as hooks or latches, advantageously located at the two ends of the front face 41. These first locking means 44 can be deformed elastically to be snap fitted into two first reception means 33, such as apertures, of the base 3. The apertures 33 are advantageously located at each corner of the base 3, facing two by two relative to the symmetrical planes S1, S2.

As shown on [Fig. 6], the central block, such as a signaling block 4b, also comprises second locking means 64, such as hooks, advantageously located at the two ends of the front face 61. The two second locking means 64 can be deformed elastically to be snap fitted in second reception means 34, such as ridges, of the base 3. The ridges 34 are advantageously located on the contour of the opening 30 of the base 3. The ridges 34 are aligned with the first and second orifices 31, 32 of the base 3 and with the central point O. The ridges 34 are closer to the central point O than the apertures 33.

Although not described, other types of locking and reception means may be possible, such as a resilient attachment element mounted on a spring or the like.

The first locking means 44 of the lateral block and the first reception means 33 are adapted to hold the lateral block fixedly with the base 3. First locking means 44 need to be strong enough to ensure that the lateral block cannot be detached when a translational or rotational force is exerted on the pusher 43. This is particularly the case when a force is exerted on the pusher 43 along the main direction X by a user.

Besides, first reception means 33 are adapted to hold the lateral blocks when a rotational force is exerted perpendicularly to the main direction X. The base 3 may also comprise additional recesses 36 to add structural support. The recesses 36 are complementary to protrusions 37 that are located on the front face 41 of a lateral block, as illustrated on [Fig. 7].

Although the second locking means 64 of the central block and the second reception means 34 are equally adapted to hold the central block fixedly with the base 3, attachment can be comparatively weaker since no force is to be exerted directly on the central block along the main direction X when the button 6 is activated. Only a rotational force or indirect electrical actuation from the lateral block may be exerted. However, such rotational force or electrical actuation cannot make the central block to detach from the base 3, even if the attachment with the second locking means 64 is comparatively weaker.

Also, second locking means 64 needs to be less robust and thus have smaller dimensions when compared with the first locking means 44. It thus permits to increase compacity, so that additional space can be used for the fixing means. This way, dimensional constraints on the component 1 can be addressed.

### Double block

According to the invention, a block can be a single block, as detailed above, but it can also be a multiple block according to the invention. The block can advantageously be a double block.

By "single/multiple" it is understood that a block that can have single/multiple functions, in particular as described hereabove for single control and signaling blocks 4a, 4b.

As shown on [Fig. 7], a double block 4c can consist in two blocks, such as two control blocks 4a fixedly attached together, so that the double block 4c forms a single element.

Although a multiple block has multiple functions, such a block only comprises two first locking means 44 to be received on the lateral part of the base 3. This way, it is possible to avoid having second locking means received in the center of the base 3. There is therefore more space provided for the fixing means to screw the base 3 against the wall 2. Dimensional constraints can easily be addressed, even with only two-point fixing means.

As shown on [Fig. 8], when the double block 4c is received on the base 3, the two control blocks 4a correspond respectively to a lateral block and a central block. Although not shown on [Fig. 8], another lateral block may be received on the base 3 next to the double block 4c.

A multiple block also comprises a single pusher 43 as shown on [Fig. 7]. The pusher 43 can be moved between several positions to command the multiple functions, simultaneously or not, of the multiple block. The pusher 43 advantageously belongs to the lateral block of the double block 4c. This way, the central block is activated thanks to the lateral block.

For instance, the pusher 43 can be moved when the activation button 6 is rotated. Clockwise rotation of the activation button 6 moves the pusher 43 in one position along the second direction Y. The pusher 43 can then command an electrical signal. Anticlockwise rotation of the activation button 6 moves the pusher 43 that is move in the second direction Y in another position along the second direction Y. The pusher 43 can then command another electrical signal. Translational movement of the actuation button 6 may also move the pusher 43 in another position along the main direction X.

### Block stacking

According to an embodiment, each control block 4a can have reception means 45 on the rear face 43 to allow another block to be added by stacking as shown on [Fig. 8]. These reception means 45 are identical or like the first or second reception means 33, 34 of the base 3. The other block then forms a second line of blocks relative to the base 3, fixed to the base 3 by means of a first line of blocks. The blocks of the second line are fixed to the blocks of the first line in the same way as on the base 3 described above.

As shown on [Fig. 9], actuation of a block of the first line can also actuate one or several blocks of the second line. For instance, in the example of this [Fig. 9], moving the pusher 43 of the block of the first line along the main direction X can command the electrical signal of the block of the second line. Thanks to this arrangement, it is possible to obtain a very compact and modular component 1 while obtaining many functions that can be commanded only with the activation button 6.

As shown on [Fig. 10], a wide variety of arrangements for a component 1 is then possible to obtain by using single control blocks CB, single signaling blocks SB or double blocks 2CB.

In all these arrangements exemplified in [Fig. 10], the central block is either a signaling block on which no force along the main direction X is to be exerted, or a double block. Thanks to the first locking means 44 and the first reception 33 means on the lateral part of the base 3, the double block can be fixedly attached to the base 3 without requiring any additional second locking means and second reception means.

### Additional embodiments of the base

The base 3 can be made of one or more materials.

According to a first embodiment, the base 3 may be made of a single material, for instance metal such as Zamak. Thanks to the use of a single material, it is possible to reduce the thickness of the base 3, in particular in the main direction X, increasing its compacity and its robustness.

Such a base 3 may be adapted to receive one or two blocks that can be screwed onto the base 3. To this end, the base 3 may also comprise complementary reception holes 35 to receive screws, as illustrated on [Fig. 4].

Alternately or in complement, the same base 3 may also be adapted to receive blocks that can be deformed elastically to be snap fitted in the base 3. To this end, the base 3 may also comprise first reception means 33 and second reception means 24 as already described above in relation with [Fig. 4].

Thanks to these different means to receive blocks, by screwing or snap-fitting, a base 3 can be used in a modular way to receive different types of blocks.

According to a second embodiment, the base 3 can be made of two or more materials.

More precisely, according to this embodiment shown on [Fig. 11A] and [Fig. 11B], the base 3 may comprise reinforced zones 38 made of metal, more particularly Zamak, around the first orifice 31 and the second orifice 32, while the rest of the base 3 being made of plastic.

Besides, the base 3 can be assembled to the body 10 thanks to a mechanism 70 having a resilient spring 71 and a contact element 72.

The resilient spring 71 is a spring-type wire, made of metal extending between a first end 73 and a second end 74. Between the first and second ends 73, 74, the resilient element 71 has a U shape, having an intermediate part 75 connected to two parallel lateral parts 76, 77.

The resilient element 71 is mounted in a groove of the contact element 72. The contact element 72, together with the resilient element 71, are adapted to be inserted into cavities of the base 3 extending from the opening 30. More precisely, two cavities face each other on each side of the opening 30.

As shown on [Fig. 12], the contact element 72 comprises a hook 78 that is adapted to come into abutment with the base 3 so that the contact element 3 cannot be pulled off the base 3 only by a translational movement.

As shown more particularly on [Fig. 11A], the two ends 73, 74 of the resilient element 71 are supported by pins 79 protruding from the base 3.

The body 10 can be assembled to the base 3 by moving the body 10 in the opening 30 of the base 30 along the main direction X. The body 10 pushes the contact element 72 away by elastically deforming the resilient element 71. Each contact element 72 can thus be engaged in a complementary cavity 80 of the body 10 to hold it fixedly with the base 3, as shown on [Fig. 13] and [Fig. 14]. The contact element 72 is spring-biased against the cavity 80 of the body 10.

When the body 10 is to be disassembled from the base 3, a user can use a tool 81, such as a screwdriver or the like, to move the contact element 72 away from the body 10 by exerting a force F perpendicular to the opening 30.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that alternative embodiments may be provided by different combinations of members and/or functions without departing from the scope of the present disclosure. In addition, it is specifically contemplated that a feature described, either individually or as part of an embodiment, can be combined with other individually described features, or parts of other embodiments.

## Claims

1. A control and/or signaling component (1) adapted to be inserted through an opening (5) of a wall (2), the component (1) comprising:
- an activation button (6) adapted to convert an input of a user into at least one translational and/or rotational movement;
- a base (3) adapted to fix the component (1) to the wall (2), the base (3) having an opening (30) in a main direction (X) adapted to receive the activation button (6);
- at least two electrical control and/or signaling blocks (4a, 4b) to be received on the base (3), wherein the at least two electrical control and/or signaling blocks (4a, 4b) comprise:
- one central electrical control or signaling block (4b) facing the activation button (6) in the main direction (X);
- at least one lateral electrical control or signaling block (4a) adapted to be placed next to the central electrical control or signaling block (4b),
wherein the central electrical control or signaling block (4b) is adapted to be actuated by:
- the lateral electrical control or signaling block (4a); or
- the rotational movement from the activation button (6).

2. The component (1) according to claim 1, wherein the central electrical control or signaling block (4b) and the lateral electrical control or signaling block (4a) are two distinct single blocks.

3. The component (1) according to claim 2, wherein the central block is a single signaling block (4b).

4. The component (1) according to claim 2 or 3, wherein the lateral electrical control or signaling block (4a) comprises first locking means (44) to be received on the base (3) and the central electrical control or signaling block (4b) comprises second locking means (64) to be received on the base (3), first and second locking means (44, 64) being different from each other.

5. The component (1) according to claim 4, wherein the base (3) comprises first reception means (33) and second reception means (34) to respectively receive the first and second locking means (44, 64).

6. The component (1) according to claim 1, wherein the central electrical control or signaling block and the lateral electrical control or signaling block form a double block (4c).

7. The component (1) according to claim 6, wherein the central block is a control block of the double block (4c).

8. The component (1) according to any of the preceding claims, wherein the central electrical control or signaling block (4b) and the lateral electrical control or signaling block (4a) comprise reception means (45) on a rear face (42, 62) to allow at least one other electrical control or signaling block to be added by stacking on the base (3).

9. The component (1) according to any of the preceding claims, wherein the base (3) is made of a single element in a metal or plastic material.

10. The component (1) according to any of the preceding claims, wherein the base (3) has a parallepipedic shape, the base (3) comprising a first symmetrical plane (S1) and a second symmetrical plane (S2), the symmetrical planes (S1, S2) intersecting orthogonally at a central point (O).

11. The component (1) according to any of the preceding claims, wherein the base (3) has a first fixing orifice (31) and a second fixing orifice (32) to be screwed against the wall (2) with fixing means (50, 51), the second reception means (64) being aligned with the first and second orifices (31, 32).

12. The component (1) according to claim 11, wherein the base (3) comprises reinforced zones (38) made of metal around the first orifice (31) and the second orifice (32).

13. The component (1) according to claim 11 or 12, wherein the central block comprises lateral faces having an oblique side (65, 66) to allow an inclined passage to be provided for a tool for maneuvering a first fixing screw (50) and a second fixing screw (50, 51) respectively located in the first and second fixing orifices (31, 32).

14. The component (1) according to any of claims 11 to 13, wherein each of the first and second fixing orifices (31, 32) is inclined relative to the main direction (X).

15. The component (1) according to any of the preceding claims, wherein the base (3) is adapted to be assembled to a body (10) of the component (1) with a mechanism (70) having a resilient spring (71) and a contact element (72).
